# EUROPEAN PATENT APPLICATION

(11) **EP 2 000 254 A1**
(43) Date of publication of application: **10.12.2008**
(21) Application number: 07254797.9
(22) Date of filing: 12.12.2007
(51) Int. Cl.: B23Q 17/24, B27C 5/10, B25F 5/02

(54) **Router with lighted base**

(30) Priority: 04.06.2007 US 757678
(71) Applicant: Techtronic Industries Company Limited, Tsuen Wan, New Territories (HK)
(72) Inventor: Chung, Koon For, Sai Kung New Territories Hong Kong (HK); Cheung, Kam Kwan, Lucky Plaza Shatin Hong Kong (HK)
(74) Representative: Reeve, Anna Elizabeth

(57) **Abstract**

A hand operated router having a base, with a portion that is transparent. Disposed within the base is at least one light emitting source, where the light emitting source is designed to partially emit light towards a workpiece. The light emitting source may be battery operated or may receive power from the same source as the router.

## Description

### BACKGROUND

The present invention relates to power tools, and more specifically, to routers having a lighted base.

Routers are typically used for cutting a workpiece. The design of a typical router creates, at times, a shadow over the workpiece and cutting element, and may impede a user's view. This causes the user to either work in unsatisfactory lighting conditions or provide additional light to illuminate the workpiece and surrounding area. One way to provide additional light on the workpiece is to attach a light or illumination means to a housing of the router. However, such a configuration still does not always improve the situation since other structures coupled to the housing are positioned between the light source and the workpiece. Moreover, when coupled to a plunging type router, the focus and intensity of the light varies with the vertical position of the housing. These and other problems are solved by the present invention, as summarized below.

### SUMMARY

According to a first aspect of the invention there is provided a router comprising a housing, at least one member having a first end coupled with the housing and a second end, a base coupled with the second end of the at least one member and having a transparent portion, and a light emitting source disposed within the base, wherein light is emitted from the transparent portion.

The at least one member may be collapsible.

The base may comprise a lens configured to direct light at least partially towards a central portion of the base. The light emitting source is preferably a light emitting diode, which may be battery operated and have an associated actuator.

In the preferred embodiment the base may be annular shaped, a portion of the base contacting the work surface. An outer circumference of the base may define a straight line.

According to another aspect of the present invention, there is provided a router comprising a housing, a plurality of members having a first end and a second end, where the first end of the plurality of members is coupled with the housing, a base coupled with the second end of the plurality of members and having a transparent portion, at least one light source disposed within the base, and a lens associated with the base and configured to direct light at least partially towards a central portion of the base.

According to another aspect of the present invention, there is provided a router comprising a housing, at least one handle coupled with the housing, a switch disposed on the router, a plurality of collapsible members having a first end coupled with the housing and a second end, an annular base coupled with the second end of the plurality of members and having a transparent portion, at least one light source disposed within a portion of the base, and a lens associated with the base and configured to direct light at least partially towards a central portion of the base.

### BRIEF DESCRIPTION OF THE DRAWINGS

Embodiments of the invention are described, by way of example only, with reference to the following drawings in which:

Figure 1 is a perspective view of a router;

Figure 2 is a perspective view of the transparent potion of a base;

Figure 3 is a perspective view of another embodiment of the base;

Figure 4 is a cross-sectional view of one embodiment of the base;

Figure 5 is a cross-sectional view of another embodiment of the base;

Figure 6 is a cross-sectional view of another embodiment of the base;

Figure 7 is a cross-sectional view of another embodiment of the base;

Figure 8 is a perspective view of another embodiment of the transparent portion of the base.

### DETAILED DESCRIPTION OF EMBODIMENTS

The invention is described with reference to the drawings in which like elements are referred to by like numerals. The relationship and function of the various elements of this invention are better understood by the following description. Each aspect so defined may be combined with any other aspect or aspects unless clearly indicated to the contrary. The embodiments described below are by way of example only, and the invention is not limited to the embodiments illustrated in the drawings

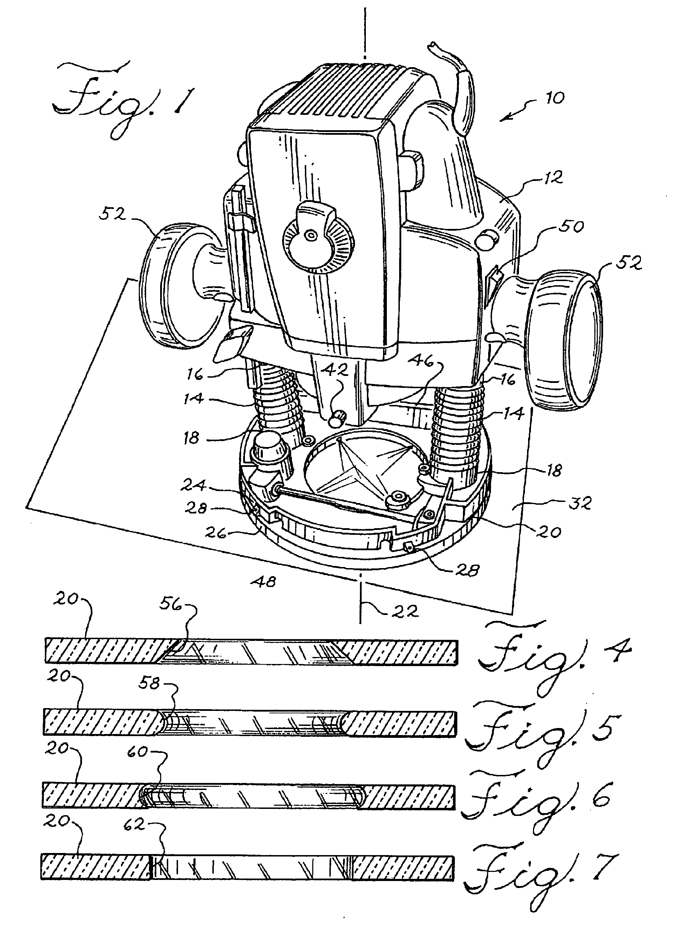

Turning now to the drawings and referring to FIG. 1, a hand-operated router 10 of the present invention is shown. The hand-operated router 10 includes a housing 12 and a handle 52. At least one member 14 is disposed below the housing 12. The member 14 has a first end 16 and a second end 18. The first end 16 of the at least one member 14 is coupled with the housing 12. The second end 18 of the at least one member 14 is coupled with a base 20.

The at least one member 14 may be a rigid member that fixes the distance between the housing 12 and the base 20, such that the base 20 and housing 12 cannot move relative to one another. Alternatively, the router 10 may have "plunging" capability, which requires the at least one member 14 to be collapsible to allow the housing 12 to reciprocate along a vertical axis 22. The collapsible feature of the at least one member 14 may be achieved through the use of, for example, a biasing member or members that are slidingly engaged to one another along the vertical axis 22. The at least one member may have a circular, triangular, or any other cross-section, independent of whether the at least one member 14 is collapsible.

The base 20 may have an annular shape, as shown in FIG. 1. The base may have a transparent portion 24 and a non-transparent portion 26. The transparent portion 24 may be made out of, for example, plexi-glass, plastic, or any other material that is transparent while still being durable. It can also be appreciated that the entire base 20 may be transparent. It is not necessary that the transparent portion 24 of the base 20 represent one-half of the entire base 20. The transparent portion 24 of the base 20 may be a fraction of the entire base 20 and may be of any shape. Moreover, there may be more than one transparent 24 portion within the base 20. A portion of the base 20 is designed to contact a work surface 32.

The transparent portion 24 of the base 20 may be coupled with the non-transparent portion 26 using a series of clips 28. It can be appreciated that any known fastening method, such as an adhesive, a nut and bolt configuration, or screw configuration may be used instead. The base 20 further includes a portion 48 that contacts a workpiece or work surface 32. The portion 48 may be part of the transparent portion 24 of the base 20, or may be part of the non-transparent portion 26 of the base 20.

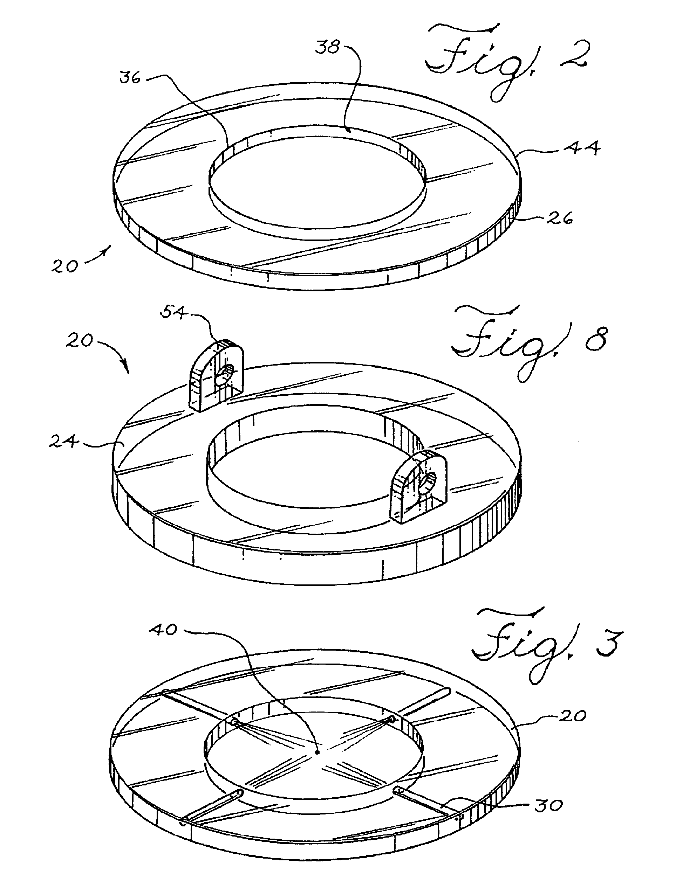

Disposed within the base 20 is at least one light emitting source 30, as shown in FIG. 3. The light emitting source 30 may be, for example, a light emitting diode ("LED"), a fluorescent bulb, a halogen bulb, a laser, a laser diode, or any other type of source that is capable of emitting light. The light source may have any suitable wavelength to provide a light that is visible to the human eye. For example, the wavelength could be such as to present a colored light such as red or green.

The light emitting source 30 may be battery operated, have a hard wire electrical connection from the power source of the hand operated router 10, or be solar powered. The location of the battery may vary; however, it is advantageous if the battery is disposed within the base 20. If the light emitting source 30 is powered through the power source of the hand operated router 10, at least one wire may be disposed along the at least one member 14 to provide a source of power to the light emitting source 30.

The light emitting source 30 may include a plurality of light emitting sources 30 disposed throughout the base 20. As shown in FIG. 3, the light emitting sources 30 may be evenly spaced from one another, to provide a uniform illumination of the workpiece and cutting area. However, such a configuration is not necessary, and the number and placement of the light emitting sources 30 may be application dependent.

The light emitting source 30 may be actuated by an actuator or a switch 50 disposed on the housing 20 or the handle 52. A contact switch may also be used to actuate the light emitting source 30. The contact switch may be triggered when the housing 12 is actuated towards the base 20, and may be released when the housing 12 returns to its original, or non-use position. It can also be appreciated that the light emitting source 30 may be actuated when power to the router 10 is turned on.

The base 20 may have an annular shape 34 as shown in FIG. 2. An inner diameter 36 of the annular shaped base 20 may also have a lens 38 configured to direct light at least partially towards a central portion 40 of the annular shaped base 20, as shown in FIGS. 4-7. The lens 38 may be constructed out of any durable polymer, or other material that is capable of directing light to a certain desired area and may be angled 56 as shown in FIG. 4, convex 58 as shown in FIG. 5, concave 60 as shown in FIG. 6, or flat 62 as shown in FIG. 7. The lens may also be configured to provide a diffuse or a concentrated beam of light. The lens 38 may be configured to project cross-hairs or guide lines onto the workpiece. The lens 38 may also be of different colors to indicate different areas on the workpiece. These features will aid the user in navigating the workpiece and increase user accuracy and visibility. While a lens has been described, it is contemplated that the light source projects the desired light pattern without the use of a lens.

A laser, or a series of lasers, may also be disposed in the base 20 to aid in displaying cross-hairs or guide lines on the workpiece. The laser may be used in conjunction with the light emitting source, or may be used independently. The illumination of the central portion 40 of the base 20 may help a user view the workpiece and a cutting element 42 during operation of the router 10. In addition, if the router 10 has plunging capability, the movement of the housing 12 along the vertical axis 22 will not adversely affect the visibility of the workpiece or the cutting element 42. The inner circumference of the base 20 may be of any other shape, such as, for example, square, rectangular, oval, or round shaped and still have the same features and characteristics as described herein.

An outer circumference 44 of the base 20, as shown in FIG. 2, may also have a portion 46 that substantially defines a straight line. The portion 46 of the base 20 is designed to allow the base 20 to travel along a straight edge. The portion 46 that substantially defines a straight line allows the user to make straight cuts across the workpiece with increased ease and efficiency. The outer circumference 44 of the base 20 may also have a lens 38 to direct light towards the surrounding area beyond the outer circumference 44 to illuminate the surrounding area and workpiece during operation.

The transparent portion 24 of the base 20 is also configured to attach to existing routers 10 as an accessory, as illustrated in FIG. 8. The transparent portion 24 may have fasteners 54 that allow the transparent portion 24 to couple to an existing base. The transparent portion 24 may be coupled to an existing base using similar attachment methods as described above. Similarly, the light emitting source 30 may be powered using the same type of power sources discussed above.

In operation, the hand-operated router 10 is powered on. The light emitting source 30 is activated either simultaneously as the router 10 is turned on or by an actuator. If the router 10 is a "plunger" style router, the light emitting source 30 may also be activated by a contact switch as the housing 12 is moved towards the base 20. The light emitting source 30 directs light on the workpiece. The lens 38 may also partially direct the light produced by the light emitting source 30 towards the central portion of the base. The light produced by the light emitting source 30 may illuminate a surrounding area around the base 20.

Once the user has completed the desired task, the hand operated router 10 and light emitting source 30 are powered off. It can also be appreciated that the router 10 may be used without activating the light emitting source 30.

While the invention has been illustrated and described in detail in the drawings and foregoing description, the same is to be considered as illustrative and not restrictive in character, it being understood that only exemplary embodiments have been shown and described and do not limit the scope of the invention in any manner. The illustrative embodiments are not exclusive of each other or of other embodiments not recited herein. Accordingly, the invention also provides embodiments that comprise combinations of one or more of the illustrative embodiments described above. Modifications and variations of the invention as herein set forth can be made without departing from the scope thereof, and, therefore, only such limitations should be imposed as are indicated by the appended claims.

## Claims

1. A router comprising:
a. a housing;
b. at least one member having a first end coupled with the housing and a second end;
c. a base coupled with the second end of the at least one member and having a transparent portion; and
d. a light emitting source disposed within the base, wherein light is emitted from the transparent portion.

2. The router of claim 1 wherein the at least one member is collapsible.

3. The router of claim 1 or 2 wherein the base comprises a lens configured to direct light at least partially towards a central portion of the base.

4. The router of claim 1, 2 or 3 wherein the light emitting source includes at least one light emitting diode.

5. The router of any preceding claim further comprising an actuator to actuate the light emitting source.

6. The router of any preceding claim where a portion of the base contacts a work surface.

7. The router of any preceding claim where the light emitting source is battery operated.

8. The router of any preceding claim where the base is substantially annular shaped.

9. The router of claim 8 where a portion of an outer circumference of the base defines a straight line.

10. A router comprising:
a. a housing;
b. a plurality of members having a first end and a second end, where the first end of the plurality of members is coupled with the housing;
c. a base coupled with the second end of the plurality of members and having a transparent portion;
d. at least one light source disposed within the base; and
e. a lens associated with the base and configured to direct light at least partially towards a central portion of the base.

11. The router of claim 10 where the plurality of members are collapsible.

12. The router of claim 10 or 11 where the base is substantially annular shaped.

13. The router of claim 12 wherein a portion of an outer circumference of the base defines a straight line.

14. The router of any one of claims 10 to 13 further comprising an actuator to actuate the at least one light emitting source.

15. The router of any one of claims 10 to 14 wherein a portion of the base contacts a work surface.

16. A router comprising:
a. a housing;
b. at least one handle coupled with the housing;
c. a switch disposed on the router;
d. a plurality of collapsible members having a first end coupled with the housing and a second end;
e. an annular base coupled with the second end of the plurality of members and having a transparent portion;
f. at least one light source disposed within a portion of the base; and
g. a lens associated with the base and configured to direct light at least partially towards a central portion of the base.

17. The router of claim 16 wherein a portion of an outer circumference of the annular base defines a straight line.

18. The router of claim 16 or 17 wherein a portion of the annular base contacts a work surface.
